# EUROPEAN PATENT APPLICATION

(11) **EP 4 524 433 A1**
(43) Date of publication of application: **19.03.2025**
(21) Application number: 24191071.0
(22) Date of filing: 26.07.2024
(51) Int. Cl.: F16H 61/04, F16H 63/50, F16H 59/46

(54) **A METHOD, AN APPARATUS, A DEVICE, A VEHICLE, AND A MEDIUM FOR CONTROLLING THE GEAR SHIFTING OF A VEHICLE**

(30) Priority: 18.09.2023 CN 202311208443
(71) Applicant: Robert Bosch GmbH, 70442 Stuttgart (DE)
(72) Inventor: TAO, Chengjun, Jiangsu, 214000 (CN); WEI, Bo, Jiangsu, 214000 (CN); NI, Fanfan, Jiangsu, 214000 (CN); ZHANG, Hantian, Jiangsu, 214000 (CN)

(57) **Abstract**

Examples of the present disclosure relate to a method, an apparatus, a device, a vehicle, and a medium for controlling the gear shifting of a vehicle. The method comprises, based on the determination that the vehicle has been started, determining the rotational speed difference between a first rotational speed of a ring gear in the transmission of the vehicle and a second rotational speed of a bushing in the transmission, wherein the ring gear is connected to the wheels of the vehicle and the bushing is connected to the motor of the vehicle. The method further comprises adjusting the rotational speed difference to a target value by adjusting the second rotational speed of the bushing, wherein the target value is greater than the gear engagement rotational speed difference used for gear shifting when the vehicle is in motion. The method further comprises, based on the determination that the vehicle is undergoing gear shifting, controlling the bushing in order to shift gears via the adjusted second rotational speed. The method disclosed in this example can improve the success rate of gear shifting while stationary, enhance vehicle performance, and improve the user experience.

## Description

### Technical Field

Examples of the present disclosure generally relate to the field of vehicle control, and specifically to a method, an apparatus, a device, a vehicle, and a medium for controlling the gear shifting of a vehicle.

### Background Art

With the development of new energy vehicles, electric vehicles have gradually become an important branch of new energy vehicles. Electric vehicles are vehicles powered by electricity that mainly use a motor to drive wheel movement, reducing the need for chemical energy and offering advantages such as energy conservation and environmental protection.

In the process of the development of electric vehicles, electric vehicle transmissions have also undergone rapid development. The shifting period of electric vehicles usually consists of five main steps. They are, namely, torque reduction, gear disengagement, speed adjustment, gear engagement, and torque increase. Through these steps, electric vehicles can automatically complete gear shifting operations, allowing the vehicle to travel at an appropriate speed. However, there are many issues that need to be addressed in the gear shifting process of the vehicle.

### Summary of the Invention

Examples of the present disclosure provide a method, an apparatus, a device, a vehicle, and a medium for controlling the gear shifting of a vehicle.

A first aspect of the present disclosure provides a method for controlling the gear shifting of a vehicle. The method comprises, based on the determination that the vehicle has been started, determining the rotational speed difference between a first rotational speed of a ring gear in the transmission of the vehicle and a second rotational speed of a bushing in the transmission, wherein the ring gear is connected to the wheels of the vehicle and the bushing is connected to the motor of the vehicle. The method further comprises adjusting the rotational speed difference to a target value by adjusting the second rotational speed of the bushing, wherein the target value is greater than the gear engagement rotational speed difference used for gear shifting when the vehicle is in motion. The method further comprises, based on the determination that the vehicle is undergoing gear shifting, controlling the bushing in order to shift gears via the adjusted second rotational speed.

A second aspect of the present disclosure provides an apparatus for controlling the gear shifting of a vehicle. The apparatus comprises a rotational speed difference determination unit, configured, based on the determination that the vehicle has been started, to determine the rotational speed difference between a first rotational speed of the ring gear in the transmission of the vehicle and a second rotational speed of the bushing in the transmission, wherein the ring gear is connected to the wheels of the vehicle and the bushing is connected to the motor of the vehicle; a rotational speed difference adjustment unit configured to adjust the rotational speed difference to the target value by adjusting the second rotational speed of the bushing, wherein the target value is greater than the gear engagement rotational speed difference used for gear shifting when the vehicle is in motion; and a gear shifting unit configured, based on the determination that the vehicle is undergoing gear shifting, to control the bushing in order to shift gears via the adjusted second rotational speed.

According to a third aspect of the present disclosure, an electronic device is provided. The electronic device comprises at least one processor; and a memory coupled to the at least one processor and having instructions stored thereon that, when executed by the at least one processor, cause the device to perform the method of the first aspect of the present disclosure.

According to a fourth aspect of the present disclosure, a vehicle is provided, wherein the vehicle comprises a transmission and the electronic device according to the third aspect of the present disclosure.

According to a fifth aspect of the present disclosure, a computer-readable storage medium is provided. The computer-readable storage medium has computer-executable instructions stored thereon, wherein the computer-executable instructions are executed by a processor to perform the steps of the method according to the first aspect of the present disclosure.

### Description of Accompanying Drawings

The exemplary examples of the present disclosure will be described in further detail in conjunction with accompanying drawings in order to further clarify the above-mentioned and other objectives, features and advantages of the present disclosure, wherein in the exemplary examples of the present disclosure, the same reference number typically represents the same parts.
FIG. 1 illustrates a schematic diagram of an exemplary environment in which the device and/or method according to examples of the present disclosure may be implemented;
FIG. 2 illustrates a schematic diagram of an example of some components in the transmission according to examples of the present disclosure;
FIG. 3 illustrates a flow chart of the method for gear shifting according to examples of the present disclosure;
FIG. 4 illustrates a flow chart of the method for controlling the gear shifting of a vehicle according to examples of the present disclosure;
FIG. 5 illustrates a schematic diagram of an exemplary rotational speed difference for gear shifting according to examples of the present disclosure;
FIGS. 6A, 6B, 6C, and 6D illustrate a schematic diagram of a gear shifting process according to examples of the present disclosure;
FIG. 7 illustrates a schematic diagram of a device for controlling the gear shifting of a vehicle according to examples of the present disclosure;
FIG. 8 illustrates a schematic block diagram of an exemplary device according to an example that is suitable to embody the content of the present disclosure.

In the various accompanying drawings, the same or corresponding numbers represent the same or corresponding portions.

### Specific Embodiments

The examples of the present disclosure will be described in further detail below with reference to the accompanying drawings. While certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It should be understood that the accompanying drawings and examples of the present disclosure are for exemplary purposes only and are not intended to limit the scope of protection of the present disclosure.

In the description of the examples of the present disclosure, the term "comprise" and other similar expressions should be understood as open-ended inclusion, that is, "comprising but not limited to". The term "based on" should be understood as "at least partially based on". The term "one example" or "this example" should be understood as "at least one example". The terms "first", "second", etc. may refer to and represent different or the same object. The text below may comprise other specific and implicit meanings.

As mentioned before, the gear shifting period of an electric vehicle mainly consists of five steps. They are, namely, torque reduction, gear disengagement, speed adjustment, gear engagement, and torque increase. Due to the lack of a clutch and synchronizer rings in multispeed transmissions for electric cars, the drive motor needs to be coordinated to shift gears during gear shifting. Two conditions need to be met for successful gear shifting. One is that the rotational speed difference between the ring gear and the bushing of the shift shaft meets the requirements; the other is that the rotation inertial difference between the input and output ends of the shift shaft is sufficiently large.

When the vehicle is in forward motion, due to its large rotational inertia, the vehicle's rotational inertia will act on the output end of the shift shaft, and it can be assumed that the rotational inertia at the output end of the shift shaft is A. The rotational inertia of the motor is smaller and is transferred to the input end of the shift shaft, and it can be assumed that the rotational inertia of the shift shaft input is B. At this point, A is much greater than B and B is a small value. Due to the significant difference in rotational inertia between A and B, it is not easy to synchronize the rotational speed difference between the ring gear and the bushing to zero during a single collision in the gear shifting process, the gear shifting is subsequently completed due to the effect of the rotational speed difference.

When the vehicle undergoes gear shifting in place, as the vehicle is stationary, A is 0, which results in a very small difference in rotational inertia between A and B. Therefore, during a single collision in the gear shifting process, the rotational speed difference between the ring gear and the bushing can be easily synchronized to zero, subsequently making it difficult to complete the gear shifting and leading to a gear engagement failure. Conventional technical solutions for electric transmissions without synchronizer rings mostly involve the transmission not shifting into neutral gear but remaining in the gear position when the gear lever is in N. There are certain potential risks since there is no neutral gear.

To address at least the above and other potential problems, the examples of the present disclosure provide a method for controlling the gear shifting of a vehicle. In this method, the rotational speed difference between a first rotational speed of the ring gear in the transmission of the vehicle and a second rotational speed of the bushing in the transmission is first determined when the vehicle is started. Then the controller adjusts the rotational speed difference to a target value by adjusting the second rotational speed of the bushing, such that the rotational speed difference before gear shifting in place is greater than the rotational speed difference used for gear shifting while the vehicle is in motion. If gear shifting is initiated, the controller controls the bushing with the adjusted second rotational speed to shift gears. By using this method, the success rate of gear shifting while stationary can be improved by increasing the rotational speed difference between the bushing and the ring gear before and during gear shifting. This enhances the vehicle's performance and improves the user experience.

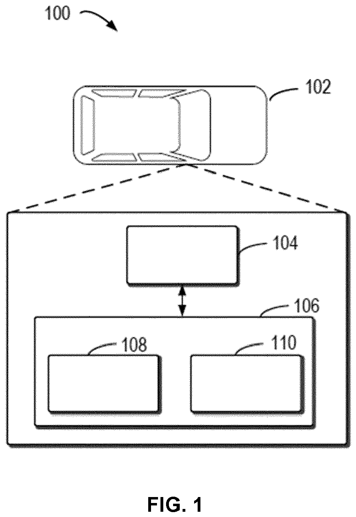

Examples of the present disclosure will be described in further detail below in conjunction with the accompanying drawings, wherein FIG. 1 illustrates an exemplary environment in which the device and/or method according to the examples of the present disclosure may be implemented;

As shown in FIG. 1, the exemplary environment 100 comprises a vehicle 102. The vehicle 102 is an electric vehicle, and the vehicle 102 comprises a controller 104. The controller 104 is used to control the vehicle 102 to complete the gear shifting operation. In one example, the controller 104 may be a complete vehicle control unit. In another example, the controller 104 may be a domain control unit in the vehicle. In yet another example, the controller 104 may be a transmission control unit. In yet another example, the controller 104 may be implemented by any suitable computing device, including, but not limited to, personal computers, mobile devices, multiprocessor systems, consumer electronics, minicomputers, distributed computing environments comprising any one of the above described systems or devices, etc.

In FIG. 1, the controller 104 in the vehicle 102 controls the transmission 106 to perform gear shifting operations. The transmission 106 comprises a ring gear 108 and a bushing 110. The ring gear 108 is connected to the wheels and correspond to one gear position of the vehicle. A bushing 110 is connected to the motor of the vehicle 102.

The vehicle 102 completes the gear shifting by controlling the engagement of the bushing 110 and the ring gear 108, allowing the vehicle to operate in the corresponding gear position. FIG. 1 illustrates an example of a ring gear 108 and a bushing 110, which are only exemplary and not a specific limitation of the present disclosure. In some examples, the vehicle 102 may comprise a plurality of ring gears and a plurality of bushings. Additionally, a bushing may be separately engaged with any one of two ring gears to enable the vehicle to operate in different gear positions.

During the driving process of the vehicle 102, the gear shifting process typically comprises five steps: torque reduction, gear disengagement, speed adjustment, gear shifting, and torque increase. Two conditions must be met for the successful gear shifting of the vehicle: first, the rotational speed difference between the ring gear on the shift shaft in the transmission and the bushing on the shift shaft must meet the predetermined requirements; second, the rotational inertia difference between the input and output ends of the shift shaft must be sufficiently large. During the driving of the vehicle, the first rotational inertia of the output end and the second rotational inertia of the input end of the shift shaft are both constant values, and the first rotational inertia is greater than the second rotation inertia. Accordingly, the rotational inertia of the ring gear 108 is also greater than the rotational inertia of the bushing, for example, by a factor of 10. In addition, before gear shifting, the gear engagement rotational speed difference between the ring gear and the bushing is achieved by requesting the motor's speed, for example, for a rotational speed difference of 15 revolutions per minute. During the driving process, both of the above conditions can be met, making it very easy to achieve gear engagement during the gear shifting process.

When vehicle 102 is stationary, the rotational inertia at the output end of the shift shaft is zero due to the vehicle's immobility. Therefore, the rotational inertia difference between the input end and output end of the shift shaft decreases, causing the rotational inertia difference between the ring gear 108 and the bushing 110 to also decrease. When using the gear engagement rotational speed difference between the ring gear and the bushing for gear shifting, the ring gear 108 and the bushing 110 will experience a single engagement impact. Due to the reduced rotational inertia difference between the ring gear 108 and the bushing 110, the rotational speed difference between the ring gear 108 and the bushing 110 can easily be synchronized to zero. At this point, the likelihood of gear shifting failure is very high.

To reduce this possibility, before gear shifting after the vehicle 102 has started, the controller 104 adjusts the rotational speed of the bushing 110 by regulating the motor's rotational speed, ensuring that the rotational speed difference between the bushing 110 and the ring gear 108 is greater than the target value of the gear engagement rotational speed difference, for example, a rotational speed difference of 20 revolutions per minute. As a result of the increased rotational speed difference, it is less likely for the rotational speed difference to be synchronized to zero upon the collision impact of the ring gear 108 and the bushing 110, thereby increasing the success rate of gear shifting. During the gear shifting process, the controller 104 also controls the rotational speed of the bushing 110 in real time to maintain the rotational speed difference at greater than the target value of the gear engagement rotational speed difference. If the rotational speed difference is synchronized during the gear shifting while stationary, gear shifting operations can be easily completed by adjusting the rotation of the bushing to reverse the rotational speed difference control, thereby converting the reverse gear friction between the bushing and the ring gear into forward gear friction. When the frictional engagement between the ring gear and the bushing is completed, the rotational speed synchronization control is discontinued to prevent other problems from arising.

By using the above method, the success rate of gear shifting while stationary can be improved by increasing the rotational speed difference between the bushing and the ring gear before and during gear shifting. This enhances the vehicle's performance and improves the user experience.

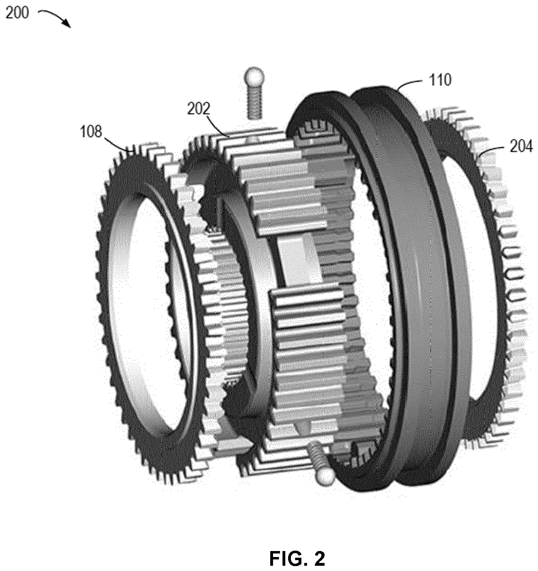

The above, in conjunction with FIG. 1, describes a block diagram of an exemplary system 100 in which the examples of the present disclosure may be implemented. The following, in conjunction with FIG. 2, describes a schematic diagram of an example of some components in the transmission according to examples of the present disclosure;

As shown in FIG. 2, the example 200 comprises the ring gear 108 shown in FIG. 1 and another ring gear 204. The ring gear 108 corresponds to one gear position of the vehicle, while the ring gear 204 corresponds to another gear position of the vehicle, and both ring gear 108 and ring gear 204 are connected to the vehicle's wheels. The example 200 also comprises the bushing 110 in FIG. 1, which is connected to the vehicle's motor. Typically, the bushing 110 is coupled to the hub 204, and the hub 204 is connected to the shift shaft and thus connected to the motor. Therefore, the rotational speed of the bushing 110 may be controlled by controlling the rotational speed of the motor. The bushing 110 may also be moved axially along the shift shaft under the control of the shift fork. When the bushing 110 moves towards one side of the ring gear 108 along the shift shaft, operation of the vehicle in the gear position corresponding to the ring gear 108 may be accomplished by engagement with the ring gear 108. When the bushing 110 moves towards one side of the ring gear 204 along the shift shaft, operation of the vehicle in the gear position corresponding to the ring gear 204 may be accomplished by engagement with the ring gear 204. The gear shifting operations of the vehicle are achieved through the above process.

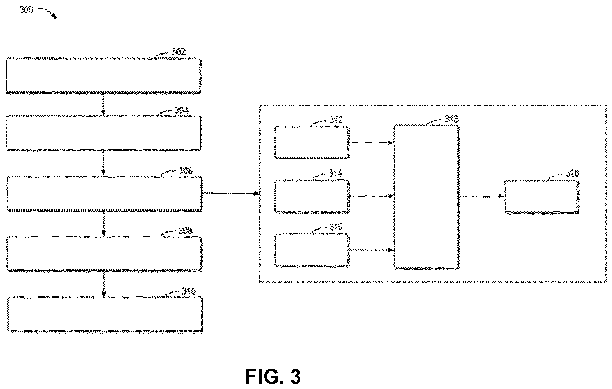

The above, in conjunction with FIG. 2, illustrates a schematic diagram of an example of some components in the transmission according to examples of the present disclosure. The following, in conjunction with FIG. 3, describes a flow chart of the method for gear shifting according to examples of the present disclosure.

At block 302, the controller controls the motor to perform torque reduction when the vehicle is undergoing a gear shifting operation. Then, at block 304, the controller controls the transmission to perform gear disengagement. Speed adjustment is performed at block 306. During speed adjustment, the controller 318 receives the position 312 of the shift fork, the rotational speed 314 of the ring gear and the rotational speed 316 of the bushing. Then, the controller 318 controls the rotational speed of the motor according to the received position 312 of the shift fork, the rotational speed 314 of the ring gear and the rotational speed 316 of the bushing to adjust the rotational speed difference between the ring gear and the bushing. During the driving process, the controller 318 adjusts the rotational speed difference to the gear engagement rotational speed difference. However, before gear shifting while stationary, the vehicle may be in neutral, wherein torque reduction and gear disengagement are not performed, but speed adjustment is performed. At this point, during the process of rotational speed difference adjustment, in order to improve the success rate of gear shifting, the rotational speed difference between the ring gear and the bushing is adjusted to be greater than a target value 320 of the gear engagement rotational speed difference For example, during the driving process, the controller adjusts the rotational speed difference between the ring gear and the bushing to 15 revolutions per minute before shifting, and before gear shifting while stationary, the controller adjusts the rotational speed difference between the ring gear and the bushing to 18 revolutions per minute. The above examples are intended only to describe the present disclosure and are not a specific limitation of the present disclosure. Those skilled in the art may set the target value of the gear engagement rotational speed difference and rotational speed difference as desired.

After adjusting the rotational speed difference, at block 308, the controller controls the transmission to perform the gear shifting operation. During the process of gear shifting while stationary, the rotational speed difference is maintained at the target value. After the completion of the gear shifting operation, at block 310, the controller controls the motor to perform a torque increase to restore torque. This completes the gear shifting or maintenance of gear position while stationary.

By using this method, during gear shifting while stationary, the success rate of gear shifting while stationary may be improved by increasing the rotational speed difference between the bushing and the ring gear before and during gear shifting. This enhances the vehicle's performance and improves the user experience.

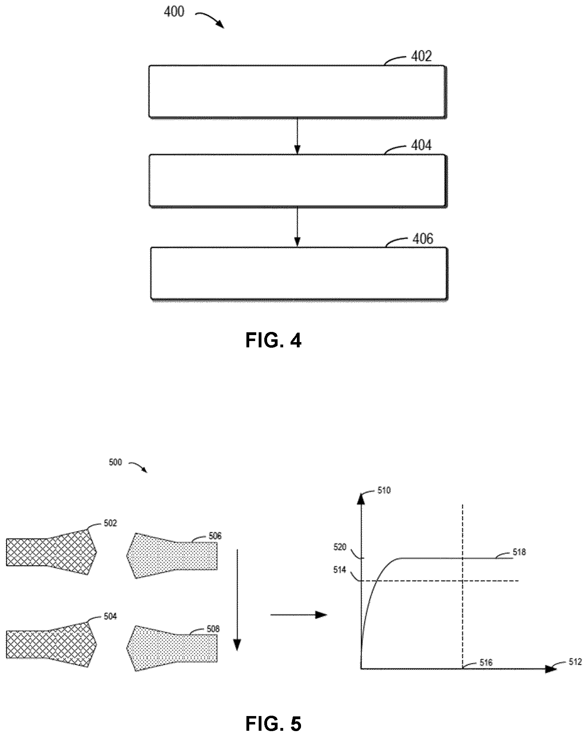

The above, in conjunction with FIG. 3, describes a flow chart of the method 300 for gear shifting according to the examples of the present disclosure; The following, in conjunction with FIG. 4, describes a flow chart of the method 400 for controlling the gear shifting of the vehicle according to examples of the present disclosure; The method 400 may be performed at the controller 104 of FIG. 1 and any suitable computing device.

At block 402, based on the determination that the vehicle has been started, the rotational speed difference between a first rotational speed of the ring gear in the transmission of the vehicle and a second rotational speed of the bushing in the transmission is determined. Therein, the ring gear is connected to the wheels of the vehicle, and the bushing is connected to the vehicle's motor. For example, the controller 104 determines the rotational speed difference between the bushing 110 and the ring gear 108. Since the ring gear is connected to the vehicle's wheels and the bushing is connected to the vehicle's motor, the rotational speed of the ring gear is correlated with the rotational speed of the vehicle's wheels, and the rotational speed of the bushing is correlated with the rotational speed of the vehicle's motor.

In some examples, the rotational speed of the ring gear is measured with a sensor associated with the ring gear, and the rotational speed of the bushing is measured with a sensor associated with the bushing. Since the ring gear and the wheels are connected, the rotational speed of the gear ring is zero when the vehicle is stationary. Thus, the rotational speed difference is primarily adjusted by adjusting the rotational speed of the bushing. In some examples, when adjusting the second rotational speed of the bushing to adjust the rotational speed difference between the bushing 110 and the ring gear 108 to the target value, if the rotational speed difference is less than the target value, the rotational speed difference may be adjusted to the target value by increasing the rotational speed of the bushing. In some examples, if the rotational speed difference is greater than the target value, the rotational speed difference may be adjusted to the target value by decreasing the rotational speed of the bushing. In some examples, in the adjustment process, if the rotational speed difference fluctuates at the target value, the rotational speed difference may be adjusted to the target value by increasing or decreasing the rotational speed of the bushing in real time.

At block 404, the rotational speed difference is adjusted to the target value by adjusting the second rotational speed of the bushing, wherein the target value is greater than the gear engagement rotational speed difference used for gear shifting when the vehicle is in motion. For example, the controller 104 controls the rotational speed of the bushing 110 to adjust the rotational speed difference between the bushing 110 and the ring gear 108 to the target value. In some examples, when adjusting the rotational speed difference to the target value by adjusting the second rotational speed of the bushing, the rotational speed difference may be adjusted to the target value by providing the adjusted second rotational speed difference to the motor.

At block 406, based on the determination that the vehicle is undergoing gear shifting, the bushing is controlled to shift gears via the adjusted second rotational speed. For example, when gear shifting is initiated, the controller 104 controls the bushing 110 to complete the gear shifting operation via the adjusted second rotational speed.

In some examples, when controlling the bushing having the adjusted second rotational speed to complete the gear shifting operation, the controller moves the bushing closer to the ring gear by controlling the shift fork in the transmission. During this process, the controller 104 needs to determine in real time whether the shift fork has reached a collision position, wherein the collision position is the position where the ring gear and the bushing collide. If the shift fork has not reached the collision position, the controller may control the bushing to maintain the adjusted second rotational speed. The bushing may be further moved by moving the shift fork. If the shift fork has reached the collision position, the controller needs to determine whether the current rotational speed difference between the bushing and the ring gear is zero. If the current rotational speed difference is zero, indicating that a collision impact has occurred, and the rotational speed of the ring gear and the bushing is synchronized to zero, the control of the rotational speed difference needs to be adjusted at this time to convert the reverse gear friction between the bushing and the ring gear into forward gear friction. In one example, when adjusting the control of the rotational speed difference, the controller 104 issues a command to cause the bushing to rotate in a second direction opposite to the first direction of initial rotation of the bushing. The gear shifting operation is then completed by continuing to move the bushing towards the ring gear. If the current rotational speed difference is not zero, the controller continues to move the shift fork to further move the bushing in order to engage with the ring gear. Then, the controller continues to check whether the shift fork has reached the final target position. If the target position is not reached, the bushing is further moved via through the shift fork. If the shift fork has reached the target position, the gear shifting is determined to be completed.

In some examples, the controller 104 obtains detection data in real time from a third sensor associated with the shift fork. Then, the controller determines the position of the shift fork based on the obtained data. By using this method, the success rate of gear shifting while stationary can be improved by increasing the rotational speed difference between the bushing and the ring gear before and during gear shifting. This enhances the vehicle's performance and at the same time improves the user experience.

The above, in conjunction with FIG. 4, describes a flow chart of the method for controlling the gear shifting of the vehicle according to the examples of the present disclosure; The following, in conjunction with FIG. 5, describes a schematic diagram of an exemplary rotational speed difference for gear shifting according to the examples of the present disclosure;

In the example 500 shown in FIG. 5, the ring gear comprises the teeth 502 and 504 and the bushing comprises the teeth 506 and 508. Since the vehicle remains stationary after it is started and before gear shifting in place, the teeth 502 and 504 of the ring gear remain stationary. Since the motor drives the rotation of the bushing after the vehicle is started, the teeth 506 and 508 of the bushing move relative to the teeth 502 and 504 of the ring gear. As shown in FIG. 5, the teeth 506 and 508 of the bushing move downward relative to the teeth 502 and 504 of the ring gear. The right side of FIG. 5 also shows a variation curve 518 of rotational speed difference versus time. The axis 512 indicates the time elapsed after the vehicle is started, and the axis 510 indicates the value of the rotational speed difference between the bushing and the ring gear. As shown in the variation curve 518, after the vehicle is started and prior to the moment 516 when gear shifting operations are performed, the controller adjusts the rotational speed difference of the vehicle to the target value 520 by adjusting the rotational speed of the motor, wherein the target value is greater than the gear engagement rotational speed difference 514 when the vehicle is in motion. Then, during the gear shifting process, the rotational speed difference continues to be maintained at greater than the target value 520 of the gear engagement rotational speed difference.

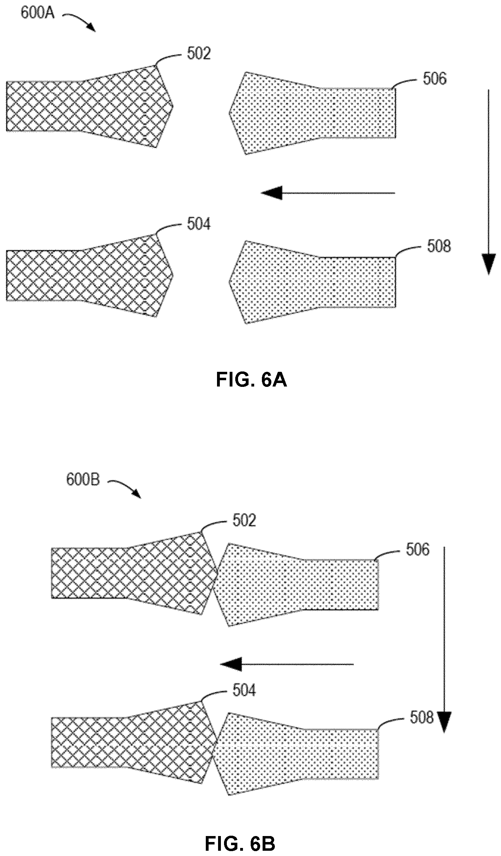

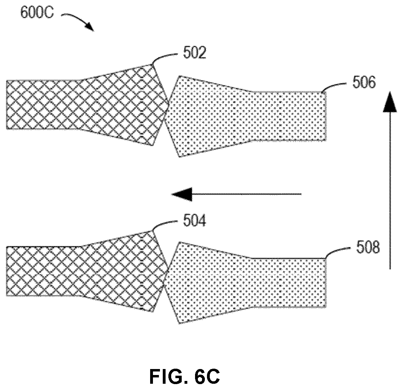

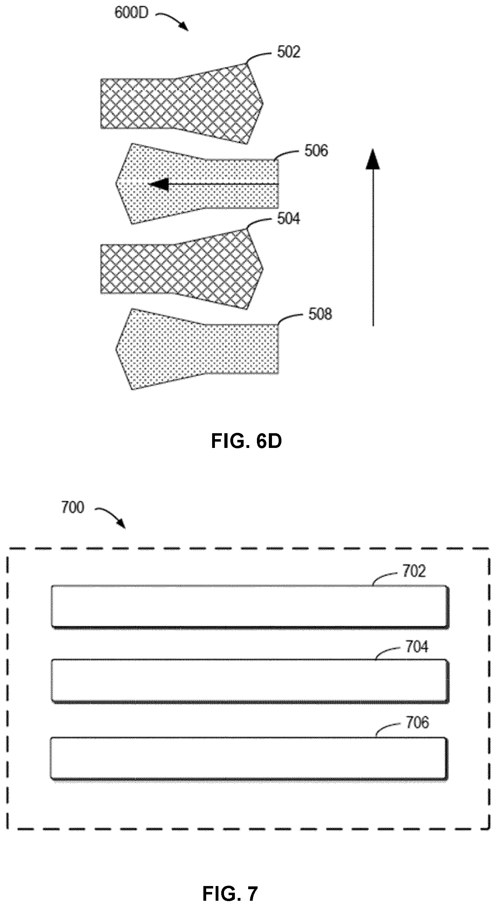

The above, in conjunction with FIG. 5, describes a schematic diagram of an exemplary rotational speed difference for gear shifting according to examples of the present disclosure; The following, in conjunction with FIGS. 6A, 6B, 6C, and 6D, describe a schematic diagram of a gear shifting process according to examples of the present disclosure;

As shown in FIG. 6A, in the first stage 600A of the gear shifting process, the teeth 502 and 504 of the ring gear are stationary, while the teeth 506 and 508 of the bushing move downward relative to the teeth 502 and 504 of the ring gear while simultaneously moving in the direction towards the teeth 502 and 504 of the ring gear. At this point, the rotational speed of the bushing is adjusted such that the rotational speed difference between the bushing and the ring gear is greater than the target value of the gear engagement rotational speed difference. For example, the rotational speed of the bushing is adjusted to 30 revolutions per minute and the rotational speed of the ring gear is 0. As shown in FIG. 6B, in the second stage 600B of the gear shifting process, the bushing is moved to the collision position, at which point the teeth 502 and 504 of the ring gear and the teeth 506 and 508 of the bushing collide. If the rotational speed of the bushing is not synchronized to zero, the bushing may be further moved such that the ring gear and the bushing engage to complete the gear shifting operation. However, if the teeth 502 and 504 of the ring gear and the teeth 506 and 508 of the bushing collide such that the rotational speed of the bushing is synchronized to zero, a third stage 600C of the gear shifting process will occur, as shown in FIG. 6C. At this point, it is necessary to reverse the rotational speed of the bushing, which can be done by rotating the bushing in the direction opposite to the initial direction of rotation, for example, by adjusting the rotational speed of the bushing to -30 revolutions per minute. As shown in FIG. 6D, in the fourth stage 600D of the gear shifting process, after reversing the rotational speed of the bushing, the sleeve is then moved further to engage with the ring gear, thus completing the gear shifting operations.

FIG. 7 further illustrates a schematic diagram of an apparatus for controlling the gear shifting of the vehicle in accordance with the examples of the present disclosure, wherein the apparatus 700 may be applied to the controller 104, and may comprise a plurality of modules for performing the corresponding steps in the method 400 as discussed in FIG. 4. As shown in FIG. 7, the apparatus 700 comprises: a rotational speed difference determination unit 702, configured, based on the determination that the vehicle has been started, to determine the rotational speed difference between a first rotational speed of a ring gear in the transmission of the vehicle and a second rotational speed of a bushing in the transmission, wherein the ring gear is connected to the wheels of the vehicle and the bushing is connected to the motor of the vehicle; a rotational speed difference adjustment unit 704 configured to adjust the rotational speed difference to the target value by adjusting the second rotational speed of the bushing, wherein the target value is greater than the gear engagement rotational speed difference used for gear shifting when the vehicle is in motion; and a gear shifting unit 706 configured, based on the determination that the vehicle is undergoing gear shifting, to control the bushing in order to shift gears via the adjusted second rotational speed.

In some examples, the gear shifting unit 706 comprises: a first movement unit configured to move the bushing closer to the ring gear via the shift fork in the transmission; a collision position determination unit configured to determine whether the shift fork has reached the collision position, which is where the ring gear collides with the bushing; a maintenance unit configured to maintain the adjusted second rotational speed based on the determination that the shift fork has not reached the collision position.

In some examples, the gear shifting unit 706 further comprises: a rotational speed difference determination unit configured, based on the determination that the shift fork has reached the collision position, to determine whether the current rotational speed difference between the bushing and the ring gear is zero; a rotational speed difference control unit, configured, based on the determination that the current rotational speed difference is zero, to adjust the control of the rotational speed difference to convert the reverse gear friction between the bushing and the ring gear into forward gear friction.

In some examples, the rotational speed difference control unit comprises: a reverse rotation unit configured to rotate the bushing in the second direction opposite to the first direction of the initial rotation of the bushing.

In some examples, the gear shifting unit 706 further comprises: a second movement unit, configured, based on the determination that the current rotational speed difference is not zero, to further move the bushing to engage with the ring gear via the shift fork; and a gear shifting completion unit configured, based on the determination that the shift fork has reached the target position, to determine the completion of gear shifting.

In some examples, the apparatus 700 further comprises: a sensor data acquisition unit configured to acquire data from a first sensor associated with the shift fork; and a position determination unit configured to determine a position of the shift fork based on the acquired data.

In some examples, the apparatus 700 further comprises: a first rotational speed determination unit configured to determine the first rotational speed of the ring gear with a second sensor; and a second rotational speed determination unit configured to determine the second rotational speed of the bushing with a third sensor.

In some examples, the rotational speed difference adjustment unit 704 comprises at least one of the following: a first adjustment unit configured to adjust the rotational speed difference to the target value by increasing the second rotational speed of the bushing; or a second adjustment unit configured to adjust the rotational speed difference to the target value by decreasing the second rotational speed of the bushing.

In some examples, the rotational speed difference adjustment unit 704 comprises: a provision unit configured to adjust the rotational speed of the bushing by providing the adjusted second rotational speed to the motor.

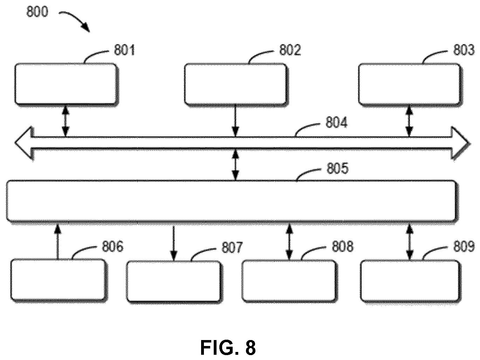

FIG. 8 illustrates a schematic block diagram of an exemplary device 800 that may be used to implement the examples of the present disclosure. The controller 104 of FIG. 1 may be implemented using the device 800. As shown in the figure, the device 800 comprises a central processing unit (CPU) 801, which can execute various appropriate actions and processing based on computer program instructions stored in a read-only memory (ROM) 802 or computer program instructions loaded onto a random access memory (RAM) 803 from a storage unit 808. Various programs and data required for the operation of the device 800 may also be stored in the RAM 803. The CPU 801, the ROM 802 and the RAM 803 are interconnected through a bus 804. An input/output (I/O) interface 805 is also connected to the bus 804.

A plurality of components in the device 800 are connected to the I/O interface 805, comprising: an input unit 806, such as a keyboard, mouse, etc.; an output unit 807, such as various types of display, speaker, etc.; a storage unit 808, such as a disk, optical disc, etc.; as well as a communication unit 809, such as a network interface card, modem, wireless communication transceiver, etc. The communication unit 809 allows the device 800 to exchange information/data with other devices through computer networks such as the Internet and/or various telecommunication networks.

The various processes and processing described above, such as the methods 300 and 400, may be executed by the processing unit 801. For example, in some examples, the methods 300 and 400 may be realized as a computer software program that it is tangibly contained in a machine-readable medium, such as the storage unit 808. In some examples, part or all of the computer programs may be loaded and/or installed onto the device 800 through the ROM 802 and/or the communication unit 809. When the computer program is loaded onto the RAM 803 and executed by the CPU 801, one or more actions of the methods 300 and 400 described above may be performed.

The present disclosure may be a method, device, system and/or computer program product. The computer program product may comprise a computer-readable storage medium uploaded with computer-readable program instructions for performing various aspects of the present disclosure.

The computer-readable storage medium may be a tangible device that maintains and stores instructions used to instruct execution devices. The computer-readable storage medium, for example, may be - but is not limited to - an electrical storage device, magnetic storage device, optical storage device, electromagnetic storage device, semiconductor memory device, or any suitable combination of the above. More specific examples of the computer-readable storage medium (a non-exhaustive list) comprise: a portable a computer disk, a hard disk, a random access memory (RAM), a read-only memory (ROM), an erasable programmable read-only memory (EPROM or flash), a static random access memory (SRAM), a portable compact disc read-only memory (CD-ROM), a digital versatile disc (DVD), a memory stick, a floppy disk, a mechanical coder, such as a punch card with instructions or structures with protrusions in grooves or indentations, as well as any suitable combinations of the above. The computer-readable storage medium used herein is not to be construed as transient signals per se, such as radio waves or other freely propagating electromagnetic waves, electromagnetic waves propagating through waveguides or other transmission media (e.g., light pulses through fiber optic cables), or electrical signals transmitted through wires.

The computer-readable program instructions described herein may be downloaded to various computing/processing devices from computer-readable storage medium, or downloaded from networks, such as the Internet, a local area network, a wide-area network and/or a wireless network to external computers or external storage devices. The networks may comprise copper transmission cables, optical fiber transmissions, wireless transmissions, routers, firewalls, switches, gateway computers, and/or edge servers. The network adapter card or network interface in each computing/processing device receives the computer-readable program instructions from the network and forwards the computer-readable program instructions for storage in computer-readable storage medium of each computing/processing device.

The computer program instructions used to execute the operations of the present disclosure may be assembly instructions, instructions set architecture (ISA) instructions, machine instructions, machine-related instructions, microcode, firmware instructions, state-setting data, or source code or object code written with any combination of one or many programming languages, with the programming languages including object-oriented programming languages such as Smalltalk, C++, etc., as well as conventional procedural programming languages such as "C" language or similar programming languages. Computer-readable program instructions may be fully executed on the user's computer, partially executed on the user's computer, executed as an independent software package, partially executed on the user's computer and partially executed on a remote computer, or fully executed on a remote computer or server. Where a remote computer is involved, the remote computer may be connected to the user's computer through any type of network, including local area network (LAN) or wide area network (WAN), or it may be connected to an external computer (such as by using an Internet service provider for Internet connection). In some examples, the state information of computer-readable program instructions is used to personalize custom electronic circuits, such as a programmable logic circuit, field-programmable gate array (FPGA) or programmable logic array (PLA), wherein the electronic circuit is able to execute computer-readable program instructions, thereby achieving the various aspects of the present disclosure.

Various aspects of the present disclosure are described herein with reference to flow charts and/or block diagrams depicting methods, apparatus (systems), and computer program products according to the examples of the present disclosure. It should be understood that every block in the flow charts and/or block diagrams and the combinations of various blocks in the flow charts and/or block diagrams may be implemented by computer-readable program instructions.

These computer-readable program instructions may be provided to general-purpose computers, dedicated computers or the processing units of other programmable data processing devices, thereby producing a type of machine, such that when these instructions are executed by the computers or processing units of other programmable data processing devices, an apparatus that realizes the functions/actions stipulated in one or more boxes in the flow charts and/or block diagrams is produced. These computer-readable program instructions may also be stored in computer-readable storage medium, enabling computers, programmable data processing devices, and/or other devices to operate in a specific manner. Therefore, the computer-readable media containing instructions comprise a manufactured product that includes instructions for implementing various aspects of the functions/actions specified in one or more boxes in the flow charts and/or block diagrams.

The computer-readable program instructions may also be loaded onto a computer, other programmable data processing devices, or other devices, enabling a series of operational steps to be executed on the computer, other programmable data processing devices, or other devices to generate a computer-implemented process. This enables the instructions executed on the computer, other programmable data processing devices, or other devices to implement the functions/actions specified in one or more boxes in the flow charts and/or block diagrams.

The flow charts and block diagrams in the accompanying drawings show the system architecture, functions and operations that may be implemented based on the systems, methods and computer program products according to the plurality of examples of the present disclosure. Regarding this, every block in the flow chart or block diagram can represent a part of a module, program section or instructions, wherein the part of the module, program section or instructions contains one or a plurality of executable instructions that are used to implement the stipulated logic function. In some alternative implementations, the occurrence of the function indicated in the blocks may also differ from the sequence indicated in the accompanying drawings. For example, two continuous blocks may actually be substantially performed in a concurrent manner and they may also sometimes be performed in reverse order, depending on the functions involved. It must also be noted that every block in the block diagrams and/or flow charts, as well as combinations of blocks in the block diagrams and/or flow charts may be implemented by dedicated hardware-based systems used to perform the stipulated functions or actions, or implemented by using combinations of dedicated hardware and computer instructions.

The various examples of the present disclosure have been described above. The descriptions provided are exemplary and not exhaustive, and they are also not limited to the disclosed examples. Many modifications and variations will be apparent to those skilled in the art without departing from the scope and spirit of the described examples. The selection of terms used in this text aims to best explain the principles and actual application of the various examples, the technological improvements in the technology in the market, or allow others of ordinary skill in the art to understand the various examples disclosed in this text.

## Claims

1. A method for controlling the gear shifting of a vehicle, comprising:
based on the determination that the vehicle has been started, determining the rotational speed difference between a first rotational speed of a ring gear in the transmission of the vehicle and a second rotational speed of a bushing in the transmission, wherein the ring gear is connected to the wheels of the vehicle and the bushing is connected to the motor of the vehicle;
adjusting the rotational speed difference to a target value by adjusting the second rotational speed of the bushing, wherein the target value is greater than the gear engagement rotational speed difference used for gear shifting when the vehicle is in motion; and
based on the determination that the vehicle is undergoing gear shifting, controlling the bushing in order to shift gears via the adjusted second rotational speed.

2. The method according to Claim 1, wherein controlling the bushing in order to shift gears via the adjusted second rotational speed comprises:
moving the bushing closer to the ring gear via the shift fork in the transmission;
determining whether the shift fork has reached a collision position, wherein the collision position is the position where the ring gear and the bushing collide; and
based on the determination that the shift fork has not reached the collision position, maintaining the adjusted second rotational speed.

3. The method according to Claim 2, wherein controlling the bushing in order to shift gears via the adjusted second rotational speed further comprises:
based on the determination that the shift fork has reached the collision position, determining whether the current rotational speed difference between the bushing and the ring gear is zero; and
based on determining that the current rotational speed difference is zero, adjusting the control of the rotational speed difference to convert the reverse gear friction between the bushing and the ring gear into forward gear friction.

4. The method according to Claim 3, wherein adjusting the control of the rotational speed difference comprises:
rotating the bushing in a second direction opposite to the first direction of initial rotation of the bushing.

5. The method according to Claim 3, wherein controlling the bushing in order to shift gears via the adjusted second rotational speed further comprises:
based on the determination that the current rotational speed difference is not zero, engaging with the ring gear by further moving the bushing via the shift fork; and
based on the determination that the shift fork has reached a target position, determining that gear shifting is complete.

6. The method according to Claim 2, further comprising:
obtaining data from a first sensor associated with the shift fork; and
determining the position of the shift fork based on the obtained data.

7. The method according to Claim 1, further comprising:
using a second sensor to determine the first rotational speed of the ring gear; and
using a third sensor to determine the second rotational speed of the bushing.

8. The method according to Claim 1, wherein adjusting the rotational speed difference to the target value by adjusting the second rotational speed of the bushing comprises at least one of the following:
adjusting the rotational speed difference to the target value by increasing the second rotational speed of the bushing; alternatively,
adjusting the rotational speed difference to the target value by decreasing the second rotational speed of the bushing.

9. The method according to Claim 8, wherein adjusting the rotational speed difference to the target value by adjusting the second rotational speed of the bushing comprises:
adjusting the rotational speed of the bushing by providing the motor with the adjusted second rotational speed.

10. An apparatus for controlling the gear shifting of a vehicle, comprising:
a rotational speed difference determination unit, configured, based on the determination that the vehicle has been started, to determine the rotational speed difference between a first rotational speed of a ring gear in the transmission of the vehicle and a second rotational speed of a bushing in the transmission, wherein the ring gear is connected to the wheels of the vehicle and the bushing is connected to the motor of the vehicle;
a rotational speed difference adjustment unit, configured to adjust the rotational speed difference to the target value by adjusting the second rotational speed of the bushing, wherein the target value is greater than the gear engagement rotational speed difference used for gear shifting when the vehicle is in motion; and
a gear shifting unit, configured, based on the determination that the vehicle is undergoing gear shifting, to control the bushing in order to shift gears via the adjusted second rotational speed.

11. An electronic device comprising:
at least one processor, as well as
a memory, coupled to the at least one processor, and having instructions stored thereon that, when executed by the at least one controller, cause the device to perform the method according to any one of Claims 1 - 9.

12. A vehicle comprising a transmission and the electronic device according to Claim 11.

13. A computer-readable storage medium having stored thereon computer-executable instructions, wherein the computer-executable instructions are executed by the processor to perform the method according to any one of Claims 1 - 9.
